# EUROPEAN PATENT SPECIFICATION

(11) **EP 3 825 805 B1**
(45) Date of publication and mention of the grant of the patent: **13.09.2023**
(21) Application number: 19838534.6
(22) Date of filing: 10.04.2019
(51) Int. Cl.: G05D 1/02, G06V 20/10

(54) **AGENT, PRESENCE PROBABILITY MAP CREATION METHOD, AGENT ACTION CONTROL METHOD, AND PROGRAM**
AGENT, PRÄSENZWAHRSCHEINLICHKEITSKARTENERZEUGUNGSVERFAHREN, AGENTAKTIONSTEUERUNGSVERFAHREN UND PROGRAMM
AGENT, PROCÉDÉ DE CRÉATION DE CARTE DE PROBABILITÉ DE PRÉSENCE, PROCÉDÉ DE COMMANDE D'ACTION D'AGENT ET PROGRAMME

(30) Priority: 20.07.2018 JP 2018136370
(43) Date of publication of application: 26.05.2021
(73) Proprietor: Sony Group Corporation, Tokyo 108-0075 (JP)
(72) Inventor: SATO, Tatsuhito, Tokyo 108-0075 (JP)
(74) Representative: 2SPL Patentanwälte PartG mbB
(86) International application number: PCT/JP2019/015544
(87) International publication number: WO 2020/017111

(56) References cited:
- WO-A1-2017/169826
- JP-A- 2004 298 975
- JP-A- 2008 225 785
- JP-A- 2014 209 293
- JP-A- 2017 521 761
- JP-A- 2018 005 470
- US-A1- 2014 309 835
- LUNENBURG JANNO ET AL: "A representation method based on the probability of collision for safe robot navigation in domestic environments", AUTONOMOUS ROBOTS, KLUWER ACADEMIC PUBLISHERS, DORDRECHT, NL, vol. 42, no. 3, 12 August 2017 (2017-08-12), pages 601-614, XP036426396, ISSN: 0929-5593, DOI: 10.1007/S10514-017-9653-X [retrieved on 2017-08-12]
- Wada, Tetsuya; Ogawa, Yuji; Wang, Zhidong; Hirata, Yasuhisa; Kosuge, Kazuhiro: "Building and Updating Human Motion Map in the Indoor Dynamic Environment", Proceedings of the 2012 JSME Conference on Robotics and Mechatronics, 27-29 May 2012; Hamamatsu, 2012, pages 1-4, XP009524732,

## Description

### TECHNICAL FIELD

The present technology relates to, for example, an agent applicable to a robot, an existence probability map creation method, an agent action control method, and a program.

### BACKGROUND ART

In recent years, the number of agent devices such as robots equipped with sensing devices such as cameras and depth sensors has increased. A robot can autonomously move inside a house by reconstructing a space map using a simultaneously localization and mapping (SLAM) technology. In a case of performing an autonomous motion, such as a walking motion according to an external state of surroundings and an internal state of the robot itself, the robot is proposed to detect an external obstacle and plan a walking route to avoid the obstacle. The robot creates an obstacle occupancy probability table indicating a relative distance between the position of the robot and the obstacle, and determines the walking route on the basis of the table. In a case of finding an obstacle on the walking route, the robot searches for an area where no obstacle exists and plans a new walking route. When the robot sequentially searches for an area around the robot and finds an obstacle, the robot starts a research for creating a new obstacle occupancy probability table. However, the efficiency of the research is poor and calculation of the walking route takes time, and the walking motion is delayed. For example, Patent Document 1 describes solving such a problem.

In Non-Patent Document 1, a representation method based on the probability of collision for safe robot navigation in domestic environments is discussed. In said document, a use of voxels for representing the occupancy of space in a domestic environment is mentioned, with the voxels being evaluated to avoid collisions between a robot and parts of the environment.

In Patent Document 2, a self-propelled working apparatus, such as a robot, navigates through an environment based on a map.

### CITATION LIST

### PATENT DOCUMENT

Patent Document 1: Japanese Patent Application Laid-Open No. 2004-298975
Patent Document 2: US 2014/0309835 A1

### NON-PATENT DOCUMENT

Non-Patent Document 1: LUNENBURG JANNO ET AL: "A representation method based on the probability of collision for safe robot navigation in domestic environments"

### SUMMARY OF THE INVENTION

### PROBLEMS TO BE SOLVED BY THE INVENTION

Since the robot is located at a predetermined arrangement position, the user cannot be imaged and captured unless the user approaches a sensable position. Even if the robot can autonomously move, the robot cannot capture the user early unless the robot is at a right position at a right time. For example, if the robot is not at the entrance at the time when the user returns home, the robot cannot notice that the user has come home.

Therefore, an object of the present technology is to provide an agent, a method for creating an existance probability map and for controlling a drive system, and a program for causing a computer to execute a method for creating an existence probability map and for controlling a drive system.

### SOLUTIONS TO PROBLEMS

The present technology is an agent according to claim 1.

The present technology is a method for creating an existence probability map and for controlling a drive system according to claim 7 and a program for causing a computer to execute a method for creating an existence probability map and for controlling a drive system according to claim 8.

### EFFECT OF THE INVENTION

According to at least one embodiment, the present technology enables a pet robot, for example, to have an ability to move to an appropriate position at an appropriate time by using an existence probability map generated from a user's life pattern. Thereby, it becomes possible to provide a service such as life support by the robot. Furthermore, the user can be imaged and captured early when the user appears in a certain space. Note that the effects described here are not necessarily limited, and any of effects described in the present technology may be exhibited.

### BRIEF DESCRIPTION OF DRAWINGS

Fig. 1 is a block diagram illustrating an example of a configuration of an agent according to the present technology.
Fig. 2 is a flowchart illustrating an existence probability map generation method.
Fig. 3 is a diagram used for describing the existence probability map generation method.
Fig. 4 is a flowchart illustrating a method of controlling an action of an agent, using an existence probability map.
Fig. 5 is a diagram used for describing action control of an agent, using the existence probability map.
Fig. 6 is a diagram used for describing imaging conditions.
Fig. 7 is a diagram used for describing action control of an agent.
Fig. 8 is a diagram used for describing action control of an agent.
Fig. 9 is a diagram used for describing an existence probability map with a direction vector.
Fig. 10 is a diagram used for describing directions.
Fig. 11 is a diagram used for describing processing of calculating an evaluation value on the basis of the existence probability map with a direction vector.
Fig. 12 is a diagram used for describing the processing of calculating an evaluation value on the basis of the existence probability map with a direction vector.
Fig. 13 is a diagram used for describing action control of a plurality of agents, using an existence probability map.
Fig. 14 is a diagram used for describing sharing of an action of an observed user.
Fig. 15 is a diagram used for describing action control in a case of a drone.

### MODE FOR CARRYING OUT THE INVENTION

Hereinafter, embodiments and the like of the present technology will be described with reference to the drawings. Note that the description will be given in the following order.
<1. First Embodiment>
<2. Second Embodiment>
<3. Third Embodiment>
<4. Modification>

Embodiments and the like described below are favorable specific examples of the present technology, and the contents of the present technology are not limited by these embodiments and the like.

### <1. First Embodiment>

A first embodiment of the present technology will be described. The first embodiment is to control an action of an agent using an existence probability map. The agent is a user interface technology for autonomously determining and executing processing. The agent is a technology in which recognition and determination functions are added to an object that is a combination of data and processing for the data. In the present description, an electronic device in which software behaving as an agent is installed, such as a pet robot, is referred to as an agent.

More specifically, the agent is moved to an optimum position at an optimum time using the existence probability map. By such control, the robot can greet a user at an entrance when the user returns home, for example. The robot has three elemental technologies: various sensors, an intelligence/control system, and a drive system.

### "Creation of Existence Probability Map"

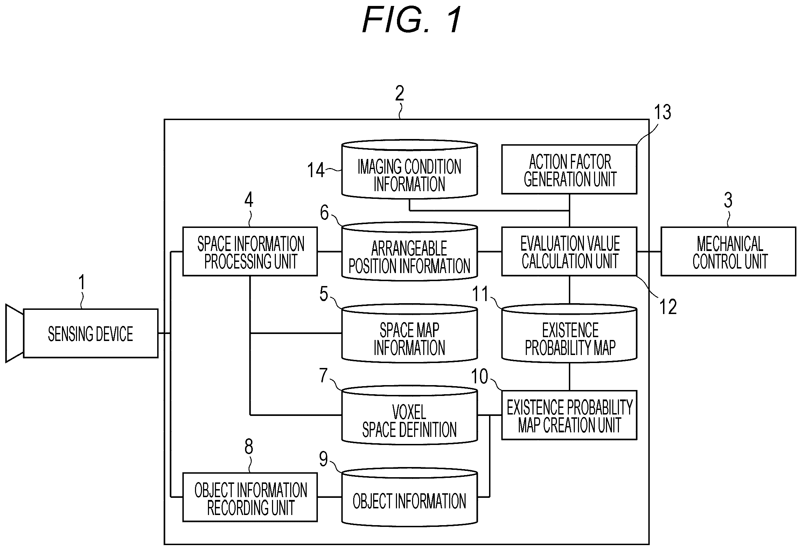

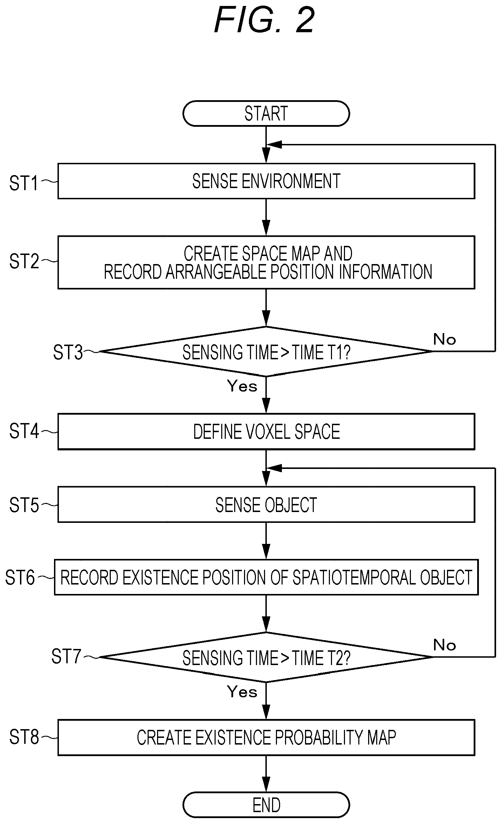

Fig. 1 illustrates an example of a configuration of the agent. Furthermore, Fig. 2 is a flowchart used for describing processing of creating the existence probability map. The agent includes a sensing device 1 including a video camera and a depth sensor, a signal processing unit 2, and a mechanical control unit 3. The mechanical control unit 3 controls the drive system. A controller (not illustrated) included in the agent controls each unit of the system illustrated in Fig. 1 as in the flowchart as illustrated in Fig. 2.

In step ST1 in Fig. 2, the sensing device 1 senses an environment for a certain period (time T1). Examples of the sensing device 1 include a camera and a distance sensor. The camera can control an imaging direction.

In step ST2, a space information processing unit 4 obtains space map information of the environment and arrangeable coordinate (arrangeable position) information, records the space map information in a space map information storage unit 5, and records the arrangeable coordinate information in an arrangeable position information storage unit (arrangeable coordinate information storage unit) 6.

The space map is created by using a technology capable of creating an environment map, such as SLAM, for example. SLAM is a technology for simultaneously estimating a self-position and creating a map from information acquired from the sensing device 1. It is necessary to create a whole map on the basis of information obtained by an autonomous mobile robot (agent) moving in an unknown environment and to know the position of the robot itself. Therefore, a technology like SLAM is required. The arrangeable coordinate information is created by, for example, sampling and recording a history of places where the robot has actually moved at appropriate time intervals. Moreover, in a case where a floor plan is known in advance in a space such as a room, a floor other than the front of a door may be set as an arrangeable place.

In step ST3, whether or not (sensing time > time T1) is established is determined. The time T1 is a time for sensing the environment as described above. In a case where this condition is not satisfied, the processing returns to step ST1 (sensing the environment). When the condition is satisfied, the processing proceeds to step ST4 (definition of voxel space).

Voxel space information indicating a divided space (environment) using a grid is defined on the basis of the space map information. The space grid division is performed such that a space (environment) is divided using cubes having a side of 50 cm, for example. A voxel represents a value of a regular grid unit in a three-dimensional space. The voxel space definition information is stored in a voxel space definition storage unit 7.

In step ST5, the sensing device 1 senses an object. Objects to be sensed are, for example, humans, animals such as dogs and cats, and other pet robots. Not only a specific object but also a plurality of objects may be made recognizable. The plurality of objects can be individually recognized, and respective existence probability maps are created. Specifically, in a case where the agent is a pet robot, an owner user is set as an object, and a habit (life pattern) of the object is learned. The object in the environment is sensed for a certain period (time T2). An example of a sensing method includes identifying a planar position of an object by RGB-based human body part recognition and general object recognition, and then applying a distance sensor value to the identified position to convert the identified position into a position in a three-dimensional space.

In step ST6, spatiotemporal position information obtained by sensing the object is recorded for each object. For example, the voxel space information is prepared for each of 288 time intervals, which are obtained by dividing 24 hours into 5 minutes. When the user is actually observed, a voxel corresponding to a position where the user inside a voxel space at the time interval is observed is voted. The object information recording unit 8 in Fig. 1 performs sensing processing and recording processing.

In step ST7, whether or not (sensing time > time T2) is established is determined. In a case where this condition is not satisfied, the processing returns to step ST5 (sensing the object). When this condition is satisfied, the processing proceeds to step ST8 (creation of an existence probability map). An existence probability map creation unit 10 in Fig. 1 performs creation processing, and the created existence probability map is stored in an existence probability map storage unit 11.

The existence probability map creation processing is processing of creating an existence probability map from the number of votes of an object voted in the voxel space information. For example, a value obtained by dividing the number of votes of the object voted for each voxel by the number of observation days is adopted as an existence probability for the voxel of the object. In this way, the existence probability map for each object is created.

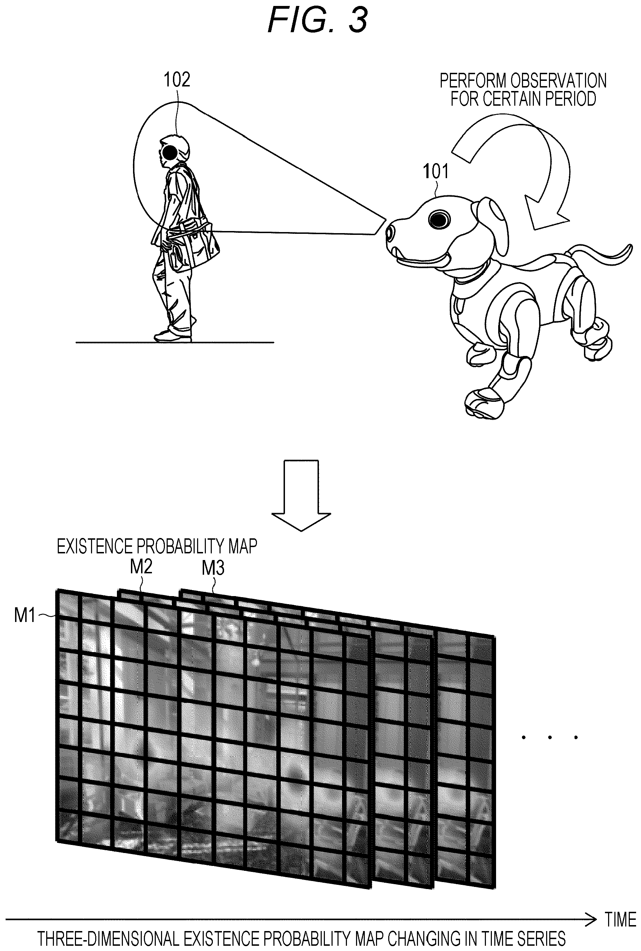

As illustrated in Fig. 3, in a case where an agent 101 senses an object 102 and the object 102 is observed, the voxel corresponding to the position where the user inside the voxel space at the time is observed is voted. For example, 288 pieces of voxel space information are formed for each day, and the value obtained by dividing the total number of votes by the number of observation days is the existence probability. The existence probability may be obtained by processing of other than dividing. As a result, 288 existence probability maps M1, M2, M3, and the like are created corresponding to the times of every 5 minutes of the day. Each existence probability map is associated with a time of the day.

### "Action Control of Agent Using Existence Probability Map"

Next, action control of the agent, for example, the pet robot based on the created existence probability map will be described. This control is processing in which an evaluation value calculation unit 12 in Fig. 1 calculates an evaluation value and supplies a control signal formed as a result of the calculation to the mechanical control unit 3, and the mechanical control unit 3 causes the agent to perform an optimum action. A time T after several minutes output by an action factor generation unit 13 at fixed intervals and imaging condition information from an imaging condition information storage unit 14 are supplied to the evaluation value calculation unit 12. The evaluation value is a value indicating at which position and under what imaging condition the agent can image the object in the best manner (that is, the agent can recognize the object in the best manner).

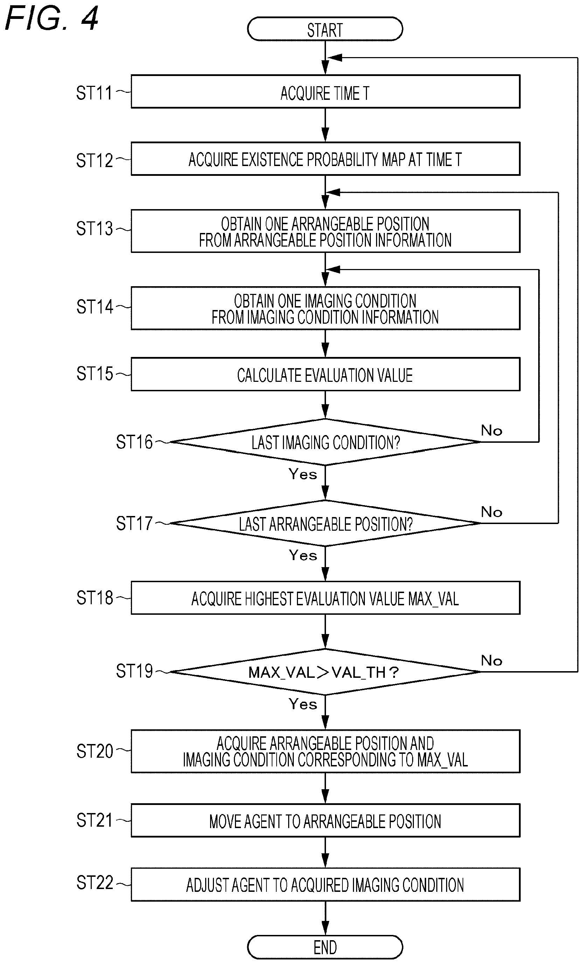

Fig. 4 is a flowchart illustrating processing of controlling an action of an agent. A controller (not illustrated) included in the agent controls each unit of the system illustrated in Fig. 1 as in the flowchart as illustrated in Fig. 4. In first step ST11, the time T is acquired from the output of the action factor generation unit 13.

In step ST12, the evaluation value calculation unit 12 extracts the existence probability map at the time T from a time series of the existence probability maps stored in the existence probability map storage unit 11.

In step ST13, one arrangeable position is obtained from arrangeable positions stored in an arrangeable position information storage unit 6.

In step ST14, one imaging condition is obtained from the imaging condition information stored in the imaging condition state storage unit 14.

In step ST15, the evaluation value is calculated. The imaging condition is comprehensively simulated for each arrangeable position, and the evaluation value is calculated from an existence probability value of a voxel within a sensing range.

In step ST16, whether or not the imaging condition is the last imaging condition in the changing imaging conditions is determined. In a case where the imaging condition is not the last imaging condition, the processing returns to step ST14 (obtaining one imaging condition from the imaging condition information). In a case where the imaging condition is the last imaging condition, the processing proceeds to step ST17.

In step ST17, whether or not the arrangeable position is the last arrangeable position in a plurality of arrangeable positions is determined. In a case where the arrangeable position is not the last arrangeable position, the processing returns to step ST14 (obtaining an imaging condition from the imaging condition information). In a case where the arrangeable position is the last arrangeable position, the processing proceeds to step ST18.

In step ST18, an evaluation value MAX_VAL having the highest evaluation is acquired. In step ST19, the highest evaluation value MAX_VAL is compared with a predetermined threshold value VAL_TH. In a case of (MAX_VAL ≤ VAL_TH), the processing returns to step ST11 (obtaining the time T). That is, it is determined that the highest evaluation value MAX_VAL is not high enough to cause an action, and processing for causing the agent to take an action is not performed. In a case if (MAX_VAL > VAL_TH), the processing proceeds to step ST20.

In step ST20, the arrangeable position and the imaging condition corresponding to the highest evaluation value MAX_VAL are acquired.

In step ST21, the drive system is controlled via the mechanical control unit 3 to move the agent to the acquired arrangeable position.

In step ST22, the drive system is controlled via the mechanical control unit 3 to adjust the agent to the acquired imaging condition.

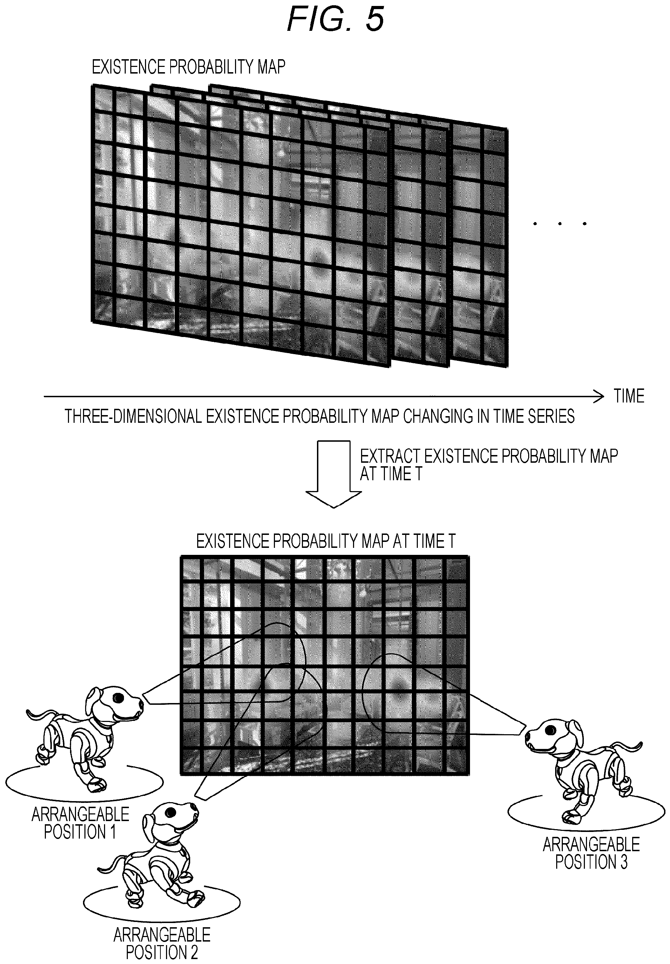

The action control processing is schematically described with reference to Fig. 5. The existence probability map at the time T is extracted from the time series of the three-dimensional existence probability maps. One arrangeable position is selected from among three arrangeable positions, for example, relating to the extracted existence probability map, and the evaluation value is calculated by changing the imaging condition, for example, a camera angle. The evaluation value is similarly calculated for each arrangeable position. A combination of the arrangeable position and the camera angle having the highest evaluation value is searched for and determined. The agent is moved to the acquired arrangeable position, and the camera angle of the agent is adjusted to the acquired camera angle.

Calculation of the evaluation value will be described. When, for example, 50% or more of a volume of a voxel is included in a sensing area of the camera, the voxel is set as a voxel for which the evaluation value is calculated. Specifically, the sensing area is an area to be imaged. Furthermore, a sum of the existence probabilities of all the voxels for which the evaluation value is calculated is calculated as the evaluation value of the arrangeable position and the imaging condition.

Note that, in the case of calculating the evaluation value, the final evaluation value may be obtained by multiplying a weighting coefficient set for each element of the user as the following object:
user preference, a distance to user, a user part type (head, face, torso, or the like), or a sensor type (camera, microphone, IR sensor, polarization sensor, depth sensor, or the like).

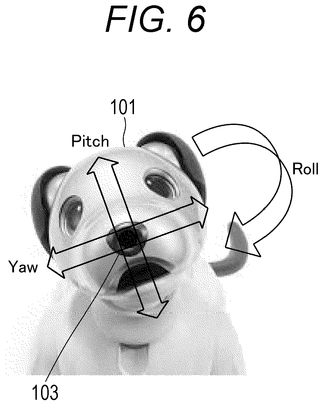

The imaging condition information is information of sensor angles obtained from a sensor 103 provided on a nose of the agent 101 and states of the agent, as illustrated in Fig. 6. The agent 101 has a movable neck and can move an upper part from the neck. The sensor angles are a roll angle, a yew angle, and a pitch angle. The states of the agent are standing, sitting, and lying down. The sensor 103 is an example of the sensing device 1 in Fig. 1.

As described above, by controlling the action of the agent on the basis of the created existence probability map, the pet robot as the agent can move to the entrance and greet the user in accordance with the time when the user as an object returns home, for example. Furthermore, the position of the pet robot to greet the user can be a place easily noticeable by the user and the pet robot's face can be turned to the user.

### <2. Second Embodiment of Present Technology>

### "Action Control of Agent Based on Online Action Prediction"

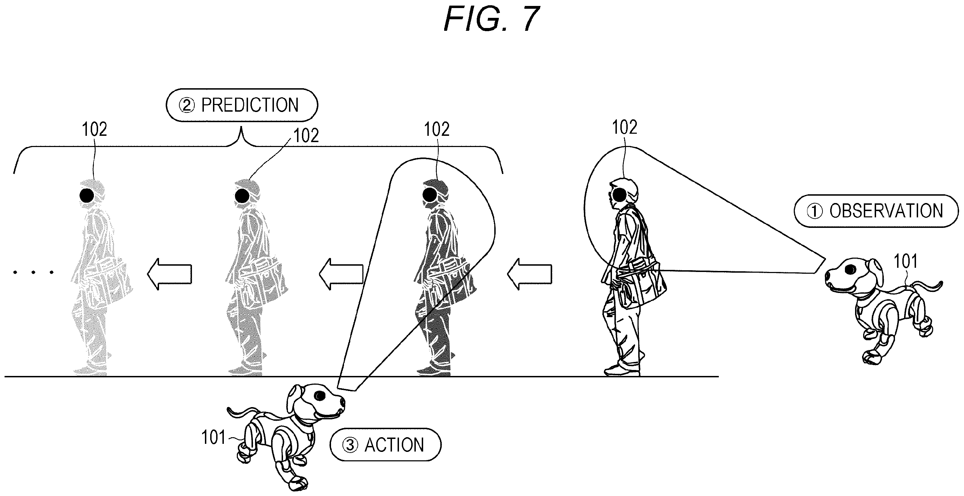

A second embodiment of the present technology is to predict an action of a user as an object, and move an agent on the basis of action prediction. An outline of the second embodiment will be described with reference to Fig. 7. An agent 101 observes an action of an object 102 (user).

Next, the agent 101 creates an existence probability map regarding future actions from an action prediction technology in which actions of the user who is currently visible are learned using the actions of the user as inputs. For example, the existence probability map regarding future actions can be created using a database formed by observing daily actions of the user.

Next, the agent 101 makes an action plan on the basis of the existence probability map regarding future actions. This action plan enables the agent 101 to take actions such as running in parallel with the object 102, and going round and cutting in the route of the object 102. In the past, the agent could only follow an object from behind.

While the existence probability map according to the above-described first embodiment is a static existence probability map, the existence probability map according to the second embodiment is a dynamic existence probability map updated according to an actual action of the user. The second embodiment can be implemented by replacing the static existence probability map in the first embodiment with a dynamic existence probability map. Note that the static existence probability map and the dynamic existence probability map may be combined.

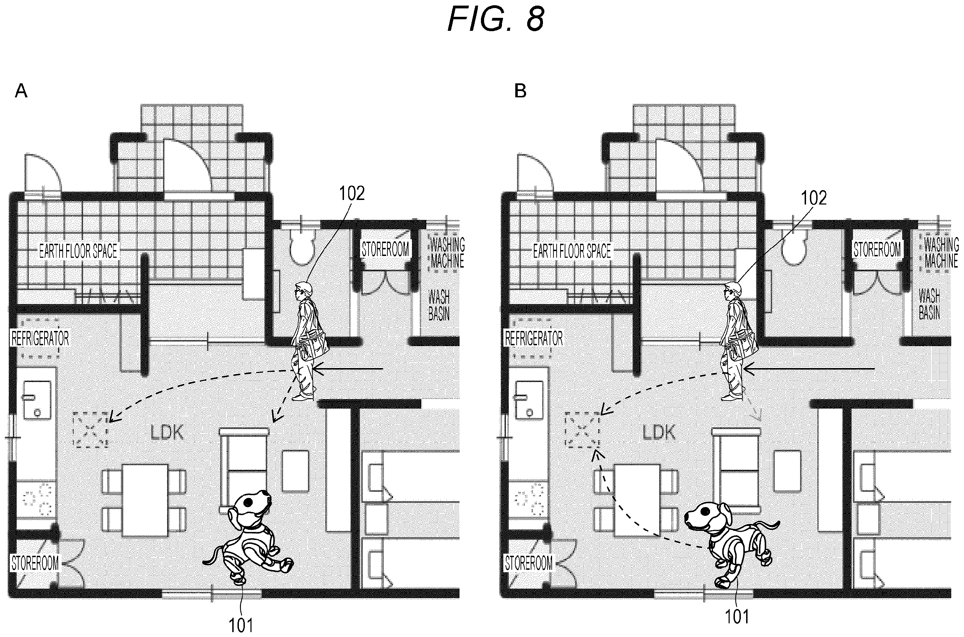

The second embodiment will be specifically described with reference to Fig. 8. As illustrated in Fig. 8A, the agent 101 stands at a predetermined position, for example, near a sofa, according to the static existence probability map similarly created to the first embodiment. Here, the object 102 comes into the room. In the dynamic existence probability map at this point, it is still unshared whether the user 102 is sitting on the sofa or heading to the kitchen. Therefore, the agent 101 still stands by near the sofa.

Next, suppose that the object 102 walks a little further into the room and walks towards the kitchen, as illustrated in Fig. 8B. According to the dynamic existence probability map, it can be seen that a probability of the object 102 moving to the kitchen becomes sufficiently high, so the agent 101 goes ahead to the kitchen before the object 102.

### "Existence Probability Map with Direction Vector"

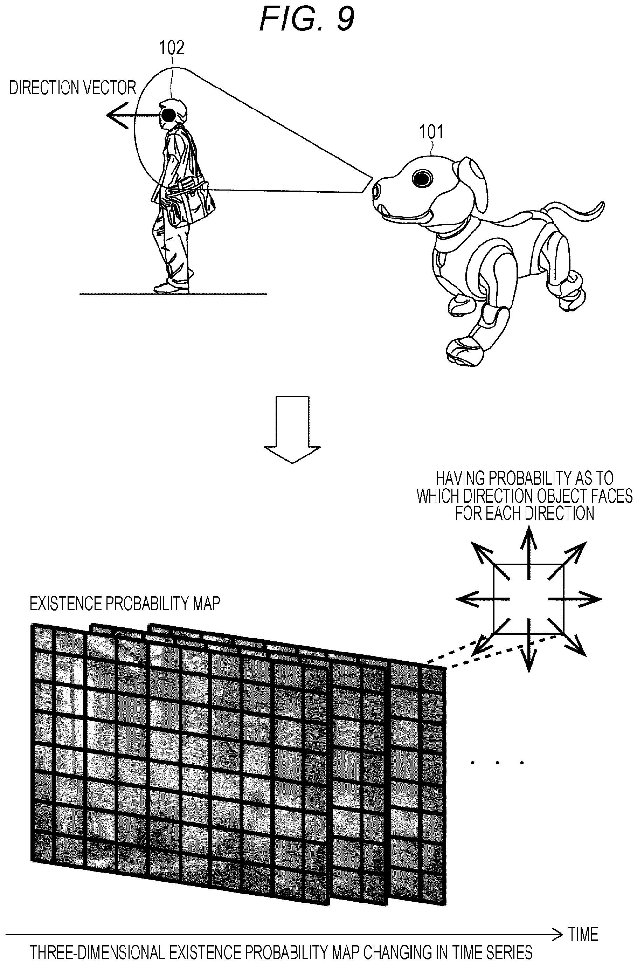

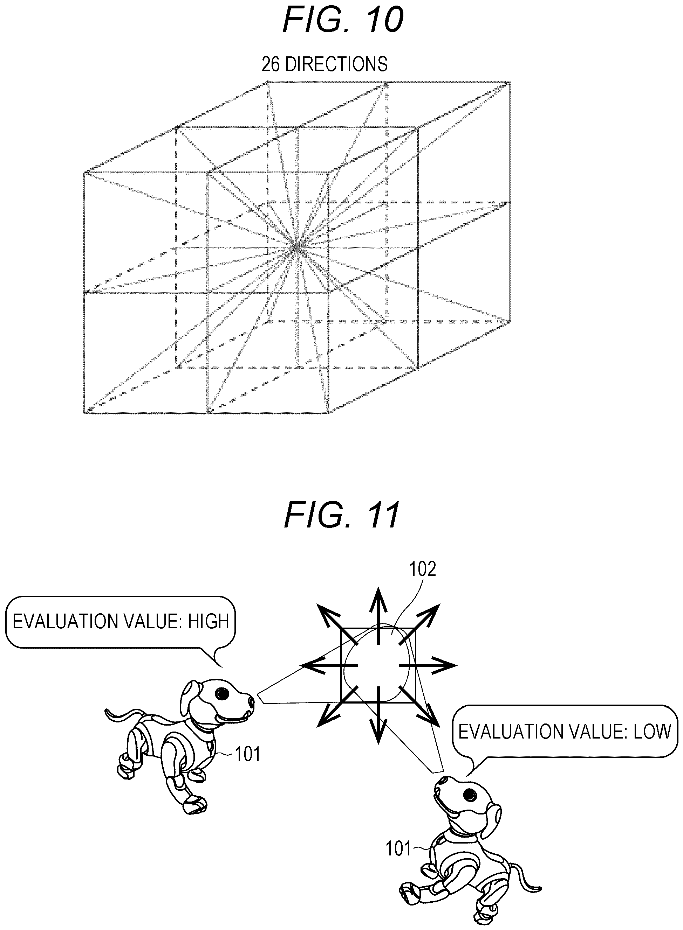

Configuring the dynamic existence probability map as an existence probability map with a direction vector will be described. As illustrated in Fig. 9, the agent 101 observes the object 102 for a certain period. A direction vector (for example, one of 26 directions (see Fig. 10)) is determined from the face direction when observing the object 102, and object information is recorded in a combination (of voxel + direction vector). The existence probability map has, in addition to the existence probability, information of a probability of which direction the object is facing.

When calculating an evaluation value on the basis of the existence probability map with a direction vector, the evaluation value of an arrangeable coordinate and an imaging condition in which the face of the user can be imaged becomes high by considering the direction vector, as illustrated in Fig. 11. That is, the agent moves to an arrangeable position where the agent can image the front of the face of the object 102 (the user's face is facing the direction of the arrow indicating the left side in Fig. 11). By combining the direction vector with the above-described action control by prediction, the agent 101 can take an action of running in parallel with the object 102 while looking at the object 102, for example. This action can be implemented by storing a probability for each face angle for each voxel of the static existence probability map of the first embodiment, and using the face angle for calculating the evaluation value.

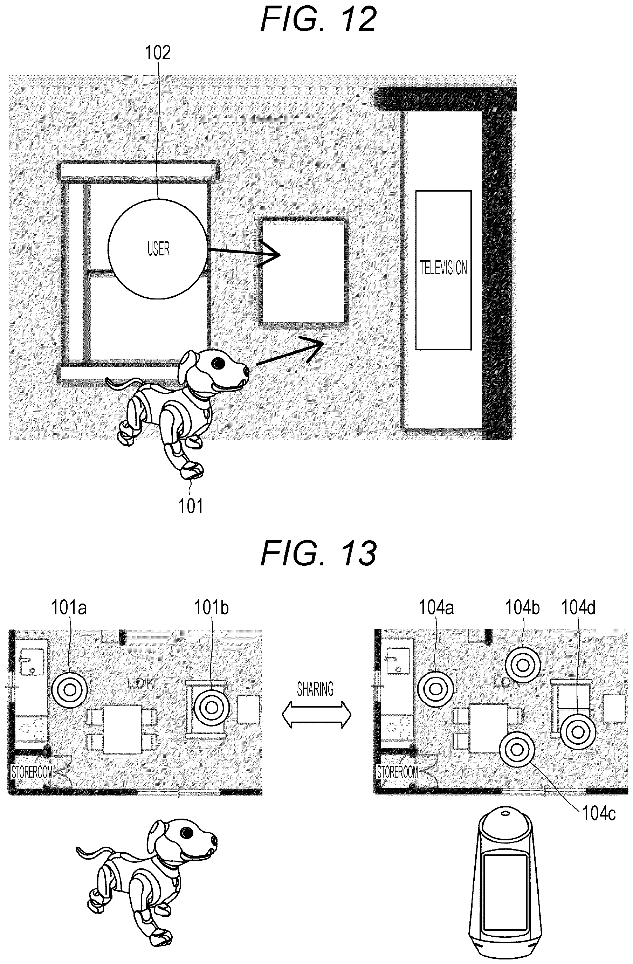

The existence probability map with a direction vector enables the agent to act to adjust the direction of the agent's face with the direction of the user's face. As illustrated in Fig. 12, when the user as the object 102 is watching a television, the face of the agent 101 looks at the direction of the television to which the user's face is directed at a position as close to the user as possible. The evaluation value becomes high when the agent looks at the direction of the television watched by the user at the close position to the user.

When there is no particular object to look at where the user's face is directed, the agent is simply controlled to look at the same direction. For example, the agent looks at a garden with the user. The agent is controlled such that the evaluation value becomes high when the agent looks the same direction as the user at the close position to the user.

### <3. Third Embodiment of Present Technology>

### "Action Control of Plurality of Agents Using Existence Probability Map"

Since there is a limit to a sensable space by one agent, agents complement share an existence probability map and complement each other in a case where there is a plurality of agents. One or both of a static existence probability map and a dynamic existence probability map may be shared.

In the example in Fig. 13, the existence probability map is shared between agents (pet robots) 101a and 101b in the same room, and smart speakers 104a, 104b, 104c, and 104d. The smart speakers 104a to 104d are speakers capable of using an interactive artificial intelligence (AI) assistant and have a sensing device. As an example, a storage unit that stores the common existence probability map can be accessed by any of the agents 101a and 101b and the smart speakers 104a, 104b, 104c, and 104d. By storing existence probability maps created by the respective agents and speakers in a common storage unit, the range of the existence probability maps can be expanded.

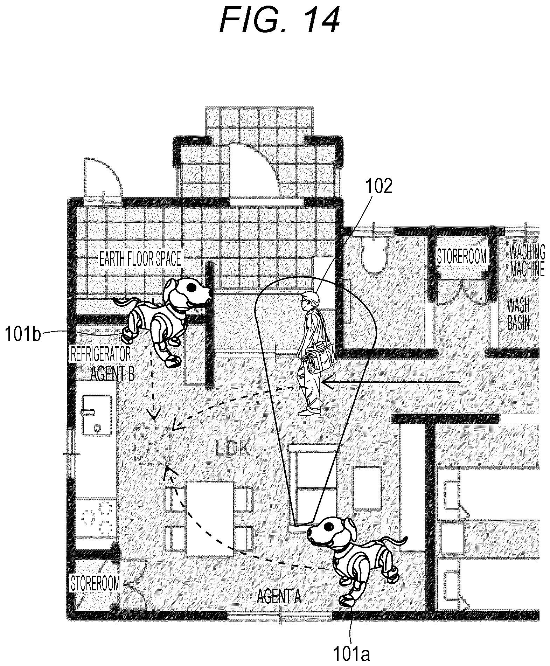

As illustrated in Fig. 14, an observed user action (illustrated by the solid line) may be shared instead of the existence probability map. In that case, estimation of the existence probability map itself is performed by each agent. In the case where the agents 101a and 101b are in the same room, the dynamic existence probability map of the object (user) 102 estimated by the agent 101a is shared with the other agent 101b. By sharing the dynamic existence probability map, not only the agent 101a but also the agent 101b can predict the action of the object 102 and proactively move. For sharing, a common storage unit is provided as described above.

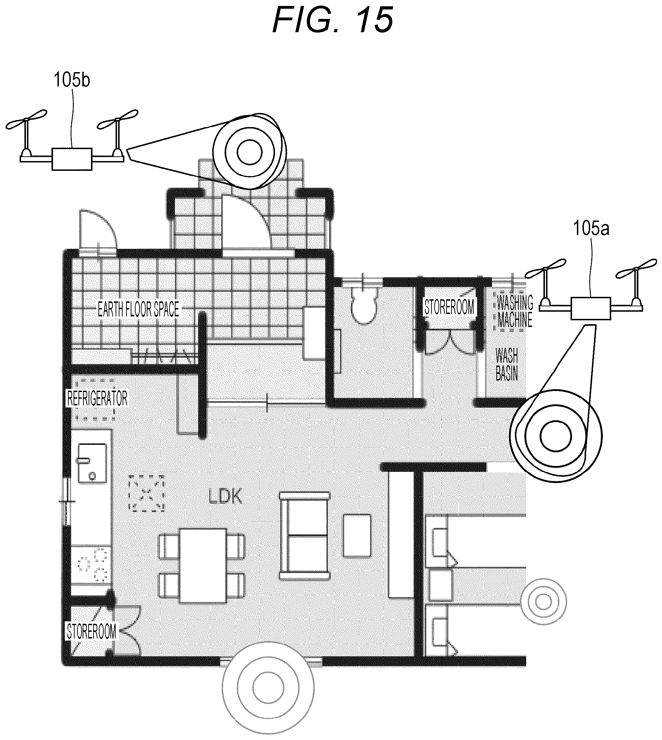

Fig. 15 illustrates an example of action control in a case where agents are drones 105a and 105b. A voxel used by a certain agent for calculating the evaluation value is not used by another agent for calculating the evaluation value. By doing so, when one agent 105a goes to an entrance, the other agent 105b goes to a back entrance, so that the other agent can be moved to the next candidate position. Since the agents act to cover places where people are likely to exist, it is effective for security purposes. Note that an arrangeable place in the case of drones is in the air having a certain margin not to collide with other objects such as walls.

### <4. Modification>

Note that the functions of the processing device in the above-described embodiments can be recorded in a recording medium such as a magnetic disk, a magnetooptical disk, or a ROM, as a program. Therefore, the functions of the agent can be implemented by reading the program from the recording medium by a computer and executing the program by a micro processing unit (MPU), a digital signal processor (DSP), or the like.

The embodiments of the present technology have been specifically described. However, the present technology is not limited to the above-described embodiments, and various modifications based on the technical idea of the present technology can be made. Furthermore, the configurations, methods, steps, shapes, materials, numerical values, and the like given in the above-described embodiments are merely examples, and different configurations, methods, steps, shapes, materials, numerical values, and the like from the examples may be used as needed. For example, the present technology can be applied not only to VR games but also to fields such as educational and medical applications.

### REFERENCE SIGNS LIST

- 1: Sensing device
- 3: Mechanical control unit
- 5: Space map information storage unit
- 6: Arrangeable position information storage unit
- 7: Voxel space definition document storage unit
- 9: Object information storage unit
- 11: Existence probability map storage unit
- 12: Evaluation value calculation unit
- 13: Action factor generation unit
- 14: Imaging condition information storage unit

## Claims

1. An agent comprising:
a sensing device (1) configured to sense an object in a real space for a certain period of time;
an existence probability map creation means (4) configured to define the real space as a group of voxels, and record, based on the sensing, every predetermined time, a vote for a voxel of the group of voxels where the object was observed, and create an existence probability map on which information of an existence probability of the object is recorded for each of the voxels based on the recorded votes;
an arrangeable position storage unit (6) configured to store information of a plurality of arrangeable positions;
**characterised by**:
an evaluation value calculation unit (12) configured to calculate an existence probability on a basis of the existence probability map, and to obtain an evaluation value for each arrangeable position of the plurality of arrangeable positions and for each of a plurality of imaging conditions at a predetermined time from an existence probability value of a voxel within a sensing area, the sensing area being defined by the respective arrangeable position and the respective imaging condition, the evaluation value being a value indicating at which position and under what imaging condition the agent can image the object in the best manner; and
a control unit (3) configured to select an arrangeable position of the plurality of arrangeable positions according to the evaluation value obtained by the evaluation value calculation unit for the respective arrangeable position, by selecting the arrangeable position from a combination of arrangeable position and imaging condition with the highest evaluation value, and to control a drive system for moving to the determined arrangeable position.

2. The agent according to claim 1, wherein, in a case of sensing the object while moving in a real space, the arrangeable position is a position on a locus of the movement.

3. The agent according to one of the claims 1 or 2, wherein the real space is indoors and the object is a person.

4. The agent according to one of the claims 1 to 3, wherein an existence probability map based on prediction of a future action of the object is created.

5. The agent according to one of the claims 1 to 4, wherein a probability of a vector in a direction of the object is included.

6. The agent according to one of the claims 1 to 5, wherein the existence probability map is shared with another agent.

7. A method for creating an existence probability map and for controlling a drive system comprising:
sensing, by a sensing device, an object in a real space for a certain period of time;
defining the real space as a group of voxels, recording, based on the sensing, every predetermined time, a vote for a voxel of the group of voxels where the object was observed, and creating an existence probability map on which information of an existence probability of the object is recorded for each of the voxels based on the recorded votes;
storing information of a plurality of arrangeable positions;
**characterised by**:
calculating an existence probability on a basis of the existence probability map;
obtaining an evaluation value for each arrangeable position of the plurality of arrangeable positions and for each of a plurality of imaging conditions at a predetermined time from an existence probability value of a voxel within a sensing area, the sensing area being defined by the respective arrangeable position and the respective imaging condition, the evaluation value being a value indicating at which position and under what imaging condition an agent can image the object in the best manner;
selecting an arrangeable position of the plurality of arrangeable positions according to the obtained evaluation value for the respective arrangeable position, by selecting the arrangeable position from a combination of arrangeable position and imaging condition with the highest evaluation value; and
controlling a drive system for moving to the selected arrangeable position.

8. A program for causing a computer to execute a method for creating an existence probability map and for controlling a drive system comprising:
sensing, by a sensing device, an object in a real space for a certain period of time;
defining the real space as a group of voxels, recording, based on the sensing, every predetermined time, a vote for a voxel of the group of voxels where the object was observed, and creating an existence probability map on which information of an existence probability of the object is recorded for each of the voxels based on the recorded votes;
storing information of a plurality of arrangeable positions;
**characterised by**:
calculating an existence probability on a basis of the existence probability map;
obtaining an evaluation value at each arrangeable position of the plurality of arrangeable positions and for each of a plurality of imaging conditions at a predetermined time from an existence probability value of a voxel within a sensing area, the sensing area being defined by the respective arrangeable position and the respective imaging condition, the evaluation value being a value indicating at which position and under what imaging condition an agent can image the object in the best manner;
selecting an arrangeable position of the plurality of arrangeable positions according to the obtained evaluation value for the respective arrangeable position, by selecting the arrangeable position from a combination of arrangeable position and imaging condition with the highest evaluation value; and
controlling a drive system for moving to the selected arrangeable position.

## Patentansprüche

1. Agent, Folgendes umfassend:
eine Erfassungsvorrichtung (1), die so konfiguriert ist, dass sie ein Objekt in einem realen Raum für einen bestimmten Zeitraum erfasst;
eine Existenzwahrscheinlichkeitskarten-Erzeugungseinrichtung (4), die so konfiguriert ist, dass sie den realen Raum als eine Gruppe von Voxeln definiert und auf der Grundlage der Erfassung zu jeder vorbestimmten Zeit ein Stimme für ein Voxel der Gruppe von Voxeln, in der das Objekt beobachtet wurde, aufzeichnet und eine Existenzwahrscheinlichkeitskarte erzeugt, auf der Informationen über eine Existenzwahrscheinlichkeit des Objekts für jedes der Voxel auf der Grundlage der aufgezeichneten Stimmen aufgezeichnet sind;
eine Speichereinheit (6) für anordenbare Positionen, die so konfiguriert ist, dass sie Informationen über eine Vielzahl von anordenbaren Positionen speichert;
**gekennzeichnet durch**:
eine Bewertungswert-Berechnungseinheit (12), die so konfiguriert ist, dass sie eine Existenzwahrscheinlichkeit auf der Grundlage der Existenzwahrscheinlichkeitskarte berechnet und einen Bewertungswert für jede anordenbare Position der Vielzahl von anordenbaren Positionen und für jede einer Vielzahl von Abbildungsbedingungen zu einem vorbestimmten Zeitpunkt aus einem Existenzwahrscheinlichkeitswert eines Voxels innerhalb eines Erfassungsbereichs erhält, wobei der Erfassungsbereich durch die jeweilige anordenbare Position und die jeweilige Abbildungsbedingung definiert ist, wobei der Bewertungswert ein Wert ist, der angibt, an welcher Position und unter welcher Abbildungsbedingung der Agent das Objekt auf die beste Weise abbilden kann; und
eine Steuereinheit (3), die so konfiguriert ist, dass sie eine anordenbare Position aus der Vielzahl der anordenbaren Positionen gemäß dem von der Bewertungswert-Berechnungseinheit für die jeweilige anordenbare Position erhaltenen Bewertungswert auswählt, indem sie die anordenbare Position aus einer Kombination von anordenbarer Position und Abbildungsbedingung mit dem höchsten Bewertungswert auswählt, und ein Antriebssystem zum Bewegen zu der bestimmten anordenbaren Position steuert.

2. Agent nach Anspruch 1, wobei in einem Fall, in dem das Objekt während einer Bewegung in einem realen Raum erfasst wird, die anordenbare Position eine Position auf einer Ortskurve der Bewegung ist.

3. Agent nach einem der Ansprüche 1 oder 2, wobei der reale Raum ein Innenraum und das Objekt eine Person ist.

4. Agent nach einem der Ansprüche 1 bis 3, wobei eine Existenzwahrscheinlichkeitskarte auf der Grundlage der Vorhersage einer zukünftigen Aktion des Objekts erzeugt wird.

5. Agent nach einem der Ansprüche 1 bis 4, wobei eine Wahrscheinlichkeit eines Vektors in einer Richtung des Objekts enthalten ist.

6. Agent nach einem der Ansprüche 1 bis 5, wobei die Existenzwahrscheinlichkeitskarte mit einem anderen Agenten geteilt wird.

7. Verfahren zum Erzeugen einer Existenzwahrscheinlichkeitskarte und zum Steuern eines Antriebssystems, Folgendes umfassend:
Erfassen, durch eine Erfassungsvorrichtung, eines Objekts in einem realen Raum während eines bestimmten Zeitraums;
Definieren des realen Raums als eine Gruppe von Voxeln, Aufzeichnen, basierend auf der Erfassung, jeder vorbestimmten Zeit, einer Stimme für ein Voxel der Gruppe von Voxeln, wo das Objekt beobachtet wurde, und Erzeugen einer Existenzwahrscheinlichkeitskarte, auf der Informationen einer Existenzwahrscheinlichkeit des Objekts für jedes der Voxel basierend auf den aufgezeichneten Stimmen aufgezeichnet sind;
Speichern von Informationen über eine Vielzahl von anordenbaren Positionen;
**gekennzeichnet durch**:
Berechnen einer Existenzwahrscheinlichkeit auf der Grundlage der Existenzwahrscheinlichkeitskarte;
Erhalten eines Bewertungswertes für jede anordenbare Position der Vielzahl von anordenbaren Positionen und für jede einer Vielzahl von Abbildungsbedingungen zu einem vorbestimmten Zeitpunkt aus einem Existenzwahrscheinlichkeitswert eines Voxels innerhalb eines Erfassungsbereichs, wobei der Erfassungsbereich durch die jeweilige anordenbare Position und die jeweilige Abbildungsbedingung definiert ist, wobei der Bewertungswert ein Wert ist, der anzeigt, an welcher Position und unter welcher Abbildungsbedingung ein Agent das Objekt auf die beste Weise abbilden kann;
Auswählen einer anordenbaren Position aus der Vielzahl der anordenbaren Positionen gemäß dem erhaltenen Bewertungswert für die jeweilige anordenbare Position, indem die anordenbare Position aus einer Kombination von anordenbarer Position und Abbildungsbedingung mit dem höchsten Bewertungswert ausgewählt wird; und
Steuern eines Antriebssystems für die Bewegung zu der gewählten anordenbaren Position.

8. Programm, das einen Computer veranlasst, ein Verfahren zum Erzeugen einer Existenzwahrscheinlichkeitskarte und zum Steuern eines Antriebssystems auszuführen, das Folgendes umfasst:
Erfassen, durch eine Erfassungsvorrichtung, eines Objekts in einem realen Raum während eines bestimmten Zeitraums;
Definieren des realen Raums als eine Gruppe von Voxeln,
Aufzeichnen, basierend auf der Erfassung, jeder vorbestimmten Zeit, einer Stimme für ein Voxel der Gruppe von Voxeln, wo das Objekt beobachtet wurde, und
Erzeugen einer Existenzwahrscheinlichkeitskarte, auf der Informationen über eine Existenzwahrscheinlichkeit des Objekts für jedes der Voxel auf der Grundlage der aufgezeichneten Stimmen aufgezeichnet werden;
Speichern von Informationen über eine Vielzahl von anordenbaren Positionen;
**gekennzeichnet durch**:
Berechnen einer Existenzwahrscheinlichkeit auf der Grundlage der Existenzwahrscheinlichkeitskarte;
Erhalten eines Bewertungswertes an jeder anordenbaren Position der Vielzahl von anordenbaren Positionen und für jede einer Vielzahl von Abbildungsbedingungen zu einem vorbestimmten Zeitpunkt aus einem Existenzwahrscheinlichkeitswert eines Voxels innerhalb eines Erfassungsbereichs, wobei der Erfassungsbereich durch die jeweilige anordenbare Position und die jeweilige Abbildungsbedingung definiert ist, wobei der Bewertungswert ein Wert ist, der anzeigt, an welcher Position und unter welcher Abbildungsbedingung ein Agent das Objekt in der besten Weise abbilden kann;
Auswählen einer anordenbaren Position aus der Vielzahl der anordenbaren Positionen gemäß dem erhaltenen Bewertungswert für die jeweilige anordenbare Position, indem die anordenbare Position aus einer Kombination von anordenbarer Position und Abbildungsbedingung mit dem höchsten Bewertungswert ausgewählt wird; und
Steuern eines Antriebssystems für die Bewegung zu der gewählten anordenbaren Position.

## Revendications

1. Agent comprenant :
un dispositif de détection (1) configuré pour détecter un objet dans un espace réel pendant une certaine période de temps ;
un moyen de création de carte de probabilité d'existence (4) configuré pour définir l'espace réel en tant que groupe de voxels, et enregistrer, sur la base de la détection, chaque temps prédéterminé, un vote pour un voxel du groupe de voxels où l'objet a été observé, et créer une carte de probabilité d'existence sur laquelle des informations d'une probabilité d'existence de l'objet sont enregistrées pour chacun des voxels sur la base des votes enregistrés ;
une unité de stockage de position pouvant être agencée (6) configurée pour stocker des informations d'une pluralité de positions pouvant être agencées ;
**caractérisé par** :
une unité de calcul d'une valeur d'évaluation (12) configurée pour calculer une probabilité d'existence sur la base de la carte de probabilité d'existence, et pour obtenir une valeur d'évaluation pour chaque position pouvant être agencée parmi la pluralité de positions pouvant être agencées et pour chacune d'une pluralité de conditions d'imagerie à un temps prédéterminé à partir d'une valeur de probabilité d'existence d'un voxel à l'intérieur d'une zone de détection, la zone de détection étant définie par la position pouvant être agencée respective et la condition d'imagerie respective, la valeur d'évaluation étant une valeur indiquant à quelle position et sous quelle condition d'imagerie l'agent peut imager l'objet de la meilleure manière ; et
une unité de commande (3) configurée pour sélectionner une position pouvant être agencée parmi la pluralité de positions pouvant être agencées en fonction de la valeur d'évaluation obtenue par l'unité de calcul de valeur d'évaluation pour la position pouvant être agencée respective, en sélectionnant la position pouvant être agencée à partir d'une combinaison d'une position pouvant être agencée et d'une condition d'imagerie avec la valeur d'évaluation la plus élevée, et pour commander à un système pilote de se déplacer vers la position pouvant être agencée déterminée.

2. Agent selon la revendication 1, en cas de détection de l'objet pendant le déplacement dans un espace réel, la position pouvant être agencée étant une position sur un lieu du mouvement.

3. Agent selon une des revendications 1 ou 2, l'espace réel étant à l'intérieur et l'objet étant une personne.

4. Agent selon une des revendications 1 à 3, une carte de probabilité d'existence basée sur une prédiction d'une action future de l'objet étant créée.

5. Agent selon une des revendications 1 à 4, une probabilité d'un vecteur dans une direction de l'objet étant incluse.

6. Agent selon une des revendications 1 à 5, la carte de probabilité d'existence étant partagée avec un autre agent.

7. Procédé de création d'une carte de probabilité d'existence et de contrôle d'un système pilote comprenant :
la détection, par un dispositif de détection, d'un objet dans un espace réel pendant une certaine période de temps ;
la définition de l'espace réel en tant que groupe de voxels, l'enregistrement, sur la base de la détection, de chaque temps prédéterminé, d'un vote pour un voxel du groupe de voxels où l'objet a été observé, et la création d'une carte de probabilité d'existence sur laquelle des informations d'une probabilité d'existence de l'objet sont enregistrées pour chacun des voxels sur la base des votes enregistrés ;
le stockage d'informations d'une pluralité de positions pouvant être agencées ;
**caractérisé par** :
le calcul d'une probabilité d'existence sur la base de la carte de probabilité d'existence ;
l'obtention d'une valeur d'évaluation pour chaque position pouvant être agencée parmi la pluralité de positions pouvant être agencées et pour chacune d'une pluralité de conditions d'imagerie à un temps prédéterminé à partir d'une valeur de probabilité d'existence d'un voxel à l'intérieur d'une zone de détection, la zone de détection étant définie par la position pouvant être agencée respective et la condition d'imagerie respective, la valeur d'évaluation étant une valeur indiquant à quelle position et sous quelle condition d'imagerie un agent peut imager l'objet de la meilleure manière ;
la sélection d'une position pouvant être agencée parmi la pluralité de positions pouvant être agencées en fonction de la valeur d'évaluation obtenue pour la position pouvant être agencée respective, en sélectionnant la position pouvant être agencée à partir d'une combinaison d'une position pouvant être agencée et d'une condition d'imagerie avec la valeur d'évaluation la plus élevée ; et
la commande à un système pilote de se déplacer vers la position pouvant être agencée sélectionnée.

8. Programme permettant d'amener un ordinateur à exécuter un procédé de création d'une carte de probabilité d'existence et de contrôle d'un système pilote comprenant :
la détection, par un dispositif de détection, d'un objet dans un espace réel pendant une certaine période de temps ;
la définition de l'espace réel en tant que groupe de voxels, l'enregistrement, sur la base de la détection, de chaque temps prédéterminé, d'un vote pour un voxel du groupe de voxels où l'objet a été observé, et la création d'une carte de probabilité d'existence sur laquelle des informations d'une probabilité d'existence de l'objet sont enregistrées pour chacun des voxels sur la base des votes enregistrés ;
le stockage d'informations d'une pluralité de positions pouvant être agencées ;
**caractérisé par** :
le calcul d'une probabilité d'existence sur la base de la carte de probabilité d'existence ;
l'obtention d'une valeur d'évaluation au niveau de chaque position pouvant être agencée parmi la pluralité de positions pouvant être agencées et pour chacune d'une pluralité de conditions d'imagerie à un temps prédéterminé à partir d'une valeur de probabilité d'existence d'un voxel à l'intérieur d'une zone de détection, la zone de détection étant définie par la position pouvant être agencée respective et la condition d'imagerie respective, la valeur d'évaluation étant une valeur indiquant à quelle position et sous quelle condition d'imagerie un agent peut imager l'objet de la meilleure manière ;
la sélection d'une position pouvant être agencée parmi la pluralité de positions pouvant être agencées en fonction de la valeur d'évaluation obtenue pour la position pouvant être agencée respective, en sélectionnant la position pouvant être agencée à partir d'une combinaison d'une position pouvant être agencée et d'une condition d'imagerie avec la valeur d'évaluation la plus élevée ; et
la commande à un système pilote de se déplacer vers la position pouvant être agencée sélectionnée.
